# EUROPEAN PATENT SPECIFICATION

(11) **EP 3 129 709 B1**
(45) Date of publication and mention of the grant of the patent: **31.10.2018**
(21) Application number: 15724039.1
(22) Date of filing: 09.04.2015
(51) Int. Cl.: F23M 5/08, F02K 9/64, F02K 9/97, F28F 13/12

(54) **COMBUSTOR OF A LIQUID PROPELLENT MOTOR**
BRENNKAMMER EINER TRIEBFLÜSSIGKEITMOTOR
COMBUSTEUR D'UN MOTEUR À PROPULSEUR LIQUIDE

(30) Priority: 09.04.2014 IT TO20140306
(43) Date of publication of application: 15.02.2017
(73) Proprietor: AVIO S.p.A., 00187 Roma (IT)
(72) Inventor: BELLOMI, Paolo, I-00128 Roma (IT); LIUZZI, Daniele, I-04100 Latina (IT); RUDNYKH, Mikhail, I-00049 Velletri (IT)
(74) Representative: Mannucci, Michele
(86) International application number: PCT/IB2015/052596
(87) International publication number: WO 2015/155733

(56) References cited:
- FR-A1- 2 776 714
- GB-A- 567 997
- US-A- 4 446 693
- US-A1- 2004 103 639
- US-A1- 2004 128 980
- US-A1- 2004 146 399
- US-A1- 2005 097 891
- US-A1- 2007 022 741
- US-A1- 2008 264 035
- US-A1- 2010 205 933
- US-A1- 2012 055 165
- US-A1- 2012 237 786
- Hutchinson: "NASA test-fires 3D printed rocket parts: low cost, high power innovation", , 28 August 2013 (2013-08-28), XP055284634, Retrieved from the Internet: URL:http://arstechnica.com/science/2013/08 /nasa-test-fires-3d-printed-rocket-parts-l ow-cost-high-power-innovation/ [retrieved on 2016-06-29]

## Description

### TECHNICAL FIELD

The present invention relates to a combustor of a liquid propellent motor.

In particular, the present invention relates to a combustor for spacecraft motors of the type comprising a tubular casing elongated along an axis thereof and delimiting a combustion chamber.

The casing comprises a cylindrical portion, in which the combustion of the propellent occurs, and a shaped portion defining a converging-diverging nozzle, in which combustion energy is transformed into kinetic energy, which are mutually aligned along an axis thereof.

### BACKGROUND ART

Known casings are made of different materials, and in particular comprise an inner wall made of metal material with high thermal conductivity, generally a copper alloy, and an outer wall or shell, made of high mechanical strength metal material, e.g. a nickel alloy.

The inner wall, conveniently made by means of mechanical machining, is provided with a plurality of plate-shaped radial baffles which radially extend over the entire length of the casing and delimit a crown of rectilinear or helical channels placed side-by-side and separated from one another by the mentioned baffles. The channels are closed by the outer wall, which is integrally connected in a fluid-tight manner to the free end portion of each baffle by welding or brazing. Thereby, the inner and outer walls delimit a crown of conduits therebetween, which are separated from one another by a respective common baffle of nearly quadrangular section.

The welding of the baffles to the outer wall allows the inner wall to be stiffened so as to confer an adequate mechanical strength against operative loads, mainly of thermal-structural nature, thereto.

The channels thus formed are crossed, in use, by a cooling fluid, conveniently defined by the liquid propellant subsequently introduced into the combustion chamber, to define part of a hydraulic cooling circuit of the casing, and in general to remove part of the heat generated in the combustion chamber. The feeding amount and speed of the cooling fluid are chosen so as to achieve the two-fold purpose of maximizing the structural strength of the inner wall and of extracting the maximum amount of thermal energy from the casing, compatibly with the maximum temperature which can be supported by the inner and outer walls and with the thermal capacities of the cooling fluid utilized.

Although universally used, the known casings of the above-described type are not very satisfactory, especially because they pose limits to increasing the amount of heat which can be removed, whit the cooling fluid being equal, and in practice they do not allow freedom in choosing the combustion chamber geometry.

This mainly derives from the fact that a thermal layering is generated in the conduits, which limits the thermal exchange and thus opposes increasing the amount of removed heat. In other words, the flow of each conduit is a layered flow, and thus the heat transfer approximates a conductive behavior between the various layers which, as known, has a clearly lower efficiency than a merely convective phenomenon.

In addition, the practically rectangular section of the conduits dictated by the geometry of the baffles poses a physical limit to increasing the heat exchange surface. Finally, the known combustors are large in size and heavy.

A known combustor according to patent US2004/012980 consists of a component made of a thermal-structural composite material. Such a part is characterized by a porous wall to the hot gases through which the propellent is introduced into the combustion chamber. Part of the propellent is further directed towards the throat of the combustor to allow it to be cooled. The oxidant is directly introduced into the chamber from the side opposite to the combustor throat.

The thermal protection architecture known from industrial patent FR2776714 is characterized by a partial cooling, where some of the fuel is introduced into the chamber through a perforated thermal barrier and some more of the fuel remains in the convective cooling circuit.

It is worth noting that the two aforementioned patents represent only one of the possible variants for cooling the combustion chambers by means of the wall porosity or of a perforated thermal protection. These types of film cooling are characterized by a reduction of combustion efficiency due to the non-uniformity of the mixture ratio along the whole cross-section of the combustor.

The combustors known from industrial patents US2004/0103639, US2010/0205933 and US208/0264035 are provided with impermeable inner and outer walls. The walls are spaced apart in radial direction and connected by means of plate-shaped baffles which extend in radial direction. Such baffles delimit passage channels for the fluid used for cooling the hot wall on gas side. In some applications, Porous structures or helical ribbons/wires or cooling fluid guiding control surfaces are introduced into the conduits in order to maximize the cooling performance and exclude coolant layering.

It is worth noting that the inner wall of the aforesaid combustors is characterized by a very high thickness, because the filling structures of the conduits are not used as structural reinforcement and for the connection with the outer wall, but are simply accommodated in the channel or are made integral with a thermal process after the insertion. The increase of thickness of the inner wall results in a decrease of thermal exchange towards the cooling conduits and in the increase of the temperature of the hot gas wall, which directly affects the performance of the combustor by causing a limitation in terms of propellent pressure and mixture ratio.

US 2010/0205933 A1 discloses, in particular, a combustor for a liquid propellant motor having an inner wall and an outer wall spaced apart from each other in a radial direction and delimiting a guiding a conduit for a cooling fluid. The guiding conduct is filled with a porous block. The block is obtained bonding together many staked individual layers.

US 2010/0205933 A1 discloses a combustor of a liquid propellent motor according to the preamble of claim 1.

### DISCLOSURE OF INVENTION

It is the object of the present invention to provide a combustor for a liquid propellent motor, the construction features of which allow the above-described problems to be solved in a simple, cost-effective manner, and a high efficiency and reliability combustor of low weight and small dimensions to be implemented.

According to the present invention, a combustor of a liquid propellent motor is provided as claimed in claim 1.

In particular, the present invention is based on a combustion chamber made in one piece and of a single material with a single construction process based on laser fusion starting from material powder. The particular material, used because it has a low thermal conductivity, preferably lower than 30 W/ (m K), and a high mechanical strength, preferably greater than 400 MPa, is highly different from the materials used in the prior solutions.

The inner wall is conveniently characterized by a thin liner, conveniently thinner than 0.8 millimeters, supported by a grid or reticular structure, which is ordered and multifunctional and has the purpose of supporting the mechanical loads, supporting the thermal loads, increasing the cooling efficiency by increasing the ratio of heat exchange surface to coolant passage volume, destroying the thermal layering inside the channel, and increasing the flow turbulence on different characteristic scales.

The grid forms an integral part of the chamber, of the inner wall or liner and of the outer shell, being constructed at the same time and integrally with said parts.

The grid is preferably designed as a series of restrained, inclined and mutually crossed beams with a smaller thickness than that of possible radial baffles, such to distribute the operative loads along the main force directions. A considerable increase in the number of beams with respect to the number of radial baffles, and thus a considerable increase in the heat exchange surface, is apparent, with the volume of metal occupied by the radial baffles in a traditional configuration being equal. The fluid speed can be modulated according to the density of the beams and to the size of the fluid passage channel. The grid allows to operate directly on the convective heat exchange capacity of the fluid by acting on the direction of the fluid itself and on the increase of vorticity.

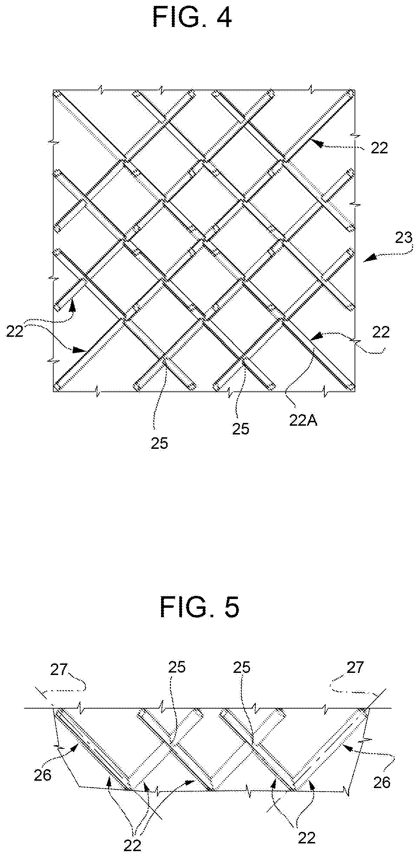

The first effect is to eliminate the thermal layering in the channel by forcing the fluid to travel along a path non-parallel to the hot surface, but forced from the outer surface of the cold shell towards the inner part of the hot liner, within one or two characteristic lengths of the fluid phenomenon. Thereby, a macroscopic mixing movement, which tends to uniform the fluid temperature along the channel, is created. Such an effect is obtained with an appropriate geometry of the cross-section of the beams, for example an aerodynamic profile shaped cross-section. The fluid can be guided along the desired direction (figure 5) with an appropriate orientation of the profiles.

The tapered shape of the profiles further allows the shape losses in the fluid to be minimized, and their increase due to the greater blocking is compensated for by increasing the size of the channel and thus with a reduction of the fluid speed. The second effect is to increase the vorticity of the fluid, and thus increase quantitatively the heat exchange by convection, thus obtaining a better mixing of the fluid on micro-scale in connection with the characteristic turbulent dimension. The vorticity increase is caused by the perturbation of the fluid induced by the presence of the grid itself, which causes a turbulence increase downstream of each profile or beam, and thus a heat exchange increase on the surface. The level of vorticity can be also modulated, by managing the relative orientation between tapered profile and flow direction, i.e. the incidence. The grid has the purpose of considerably increasing the heat exchange by convection on cold side and of preserving the structural integrity of the chamber while preserving the capacity of supporting the operative loads by connecting the outer shell to the inner liner.

A variant of the present invention uses the grid on only one or more stretches of the conduit and only where the thermal cooling requirement is higher. In particular, if the extent of the thermal flow caused by the hot gases is low, the technical solution of drastically reducing the thickness of the liner may be sufficient to ensure the thermal balance despite the decrease of thermal conductivity of the material. Therefore, combustion chambers which have a mixed architecture, with a stretch made following a traditional configuration and a stretch made following a reticular configuration according to the present invention, may be created. In all cases, the camera thus designed can be made in one piece and no subsequent construction processes are needed.

### BRIEF DESCRIPTION OF THE DRAWINGS

The invention will now be described with reference to the accompanying drawings which show a non-limitative embodiment thereof, in which:
figure 1 diagrammatically shows in blocks and semiradial section, with parts removed for clarity, a liquid propellent motor provided with a preferred embodiment of the combustor according to the dictates of the present invention;
figure 2 is a diagrammatic section taken along line II-II in figure 1;
figure 3 is diagrammatic, perspective partial view of a portion of a detail in figures 1 and 2;
figures 4 and 5 are a top view and a side view, respectively, of the detail in figure 3;
figure 6 shows a variant of a detail in figures 1 and 2;
figure 7 shows a further variant of a detail in figures 1 and 2 in section and on enlarged scale; and
figures 8A and 8B are different sections on greatly enlarged scale taken according to line VIII-VIII in figure 3.

### BEST MODE FOR CARRYING OUT THE INVENTION

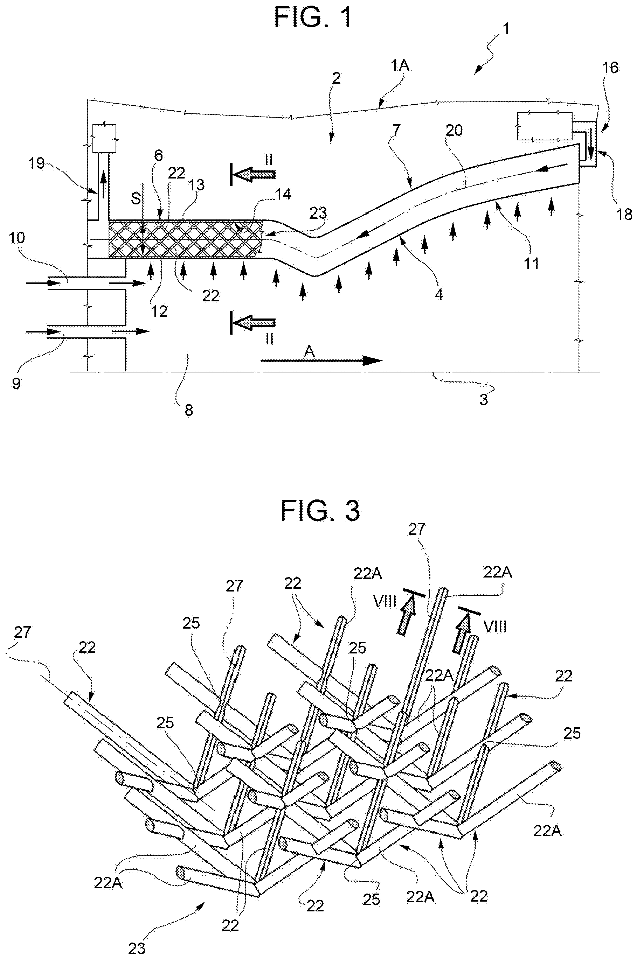

In figure 1, reference numeral 1 indicates, as a whole and with parts removed for clarity, a liquid propellent spacecraft motor.

Motor 1 comprises a thrust chamber 1A, comprising, in turn, an elongated combustor 2 having its own axis 3. Combustor 2 comprises a tubular metal casing 4. Casing 4 is shaped coaxially to axis 3 and, in the feeding direction of the combustion product indicated with arrow A in figure 1, comprises a tubular portion 6 with a cylindrical generating line and a shaped tubular portion 7, both coaxial to axis 3 and stably connected to each other in a fluid-tight manner (figure 1).

The tubular portion 6 laterally delimits a combustion chamber 8, in which a feeding conduit 9 of the liquid propellent and a feeding conduit 10 of the combustion supporting fluid, forming part of the thrust chamber 1A, lead.

Instead, the shaped tubular portion 7 delimits a converging-diverging nozzle 11, known per se, through which the combustion products generated in the combustion chamber 8 pass.

Again with reference to figure 1, casing 4 is a hollow casing and comprises an inner wall 12 defining the geometry of the combustion chamber 8 and of the nozzle 11, and an outer wall 13, both being coaxial to axis 3.

The walls 12 and 13 are blind walls impermeable to liquid or gaseous substances, are spaced apart from each other in radial direction, and delimit a sealed annular conduit 14 therebetween, which longitudinally extends between the inlet of the propellent/combustion supporting fluid in the combustion chamber 8 and the outlet of the combustion products from nozzle 11.

Conduit 14, which in the particular example described has a nearly constant thickness S along axis 3, forms part of a cooling circuit of combustor 2, indicated as a whole by reference numeral 16 in figure 1.

The cooling circuit 16 further comprises an inlet manifold 18 for introducing a cooling fluid into conduit 14, conveniently the same liquid propellent then sent to the combustion chamber 8 or another cooling fluid, and an outlet manifold 19 adapted to receive the cooling fluid from conduit 14. Between the two manifolds 18 and 19, conduit 14 guides the cooling fluid in a feeding direction indicated by reference numeral 20 in figure 1 and substantially parallel to a generating line of the inner wall 12.

In the particular example described, the cooling fluid moves in the direction opposite to the displacement of the combustion products. Alternatively, according to a different embodiment, the cooling fluid moves in a direction agreeing with the displacement of the combustion products.

Again with reference to figure 1, conduit 14 accommodates a plurality of bar-shaped elongated elements 22 which form part of casing 4 and extend between the walls 12 and 13. The elongated elements 22 are stably connected to the walls 12, 13 and are elongated in respective direction transverse to the feeding direction 20 of the cooling fluid in conduit 14.

The elongated elements 22 define a homogenous, narrow-mesh grid 23 for perturbing the cooling fluid which passes in direction 20 having the function of generating a predetermined turbulence in the cooling fluid itself in each zone of conduit 14.

In the particular example described, grid 23 has a plurality of nodes 25 for connecting together the bar-shaped elements 22. Conveniently, the nodes 25 are uniformly distributed inside conduit 14.

Alternatively, the distribution of the nodes 25 varies from one zone to the other of conduit 14 in order to make a different perturbation of the cooling fluid, and therefore a different removal of the heat through casing 4. The different distribution of the nodes 25 is obtained by varying the geometry, distribution or orientation of the elongated elements 22 in conduit 14.

Conveniently, the elongated members 22 have mutually consecutive rectilinear stretches 22A, each of which, in the particular example described, is defined by a piece of bar and leads to at least one node 25, as shown in figures 3, 4 and 5 which depict a portion of grid 23.

In the particular example described, each rectilinear stretch 22A is butt-joined to a subsequent stretch 22A and is laterally delimited by an outer surface 26 having a rectilinear generating line parallel to a longitudinal extension axis 27 of the respective stretch 22A.

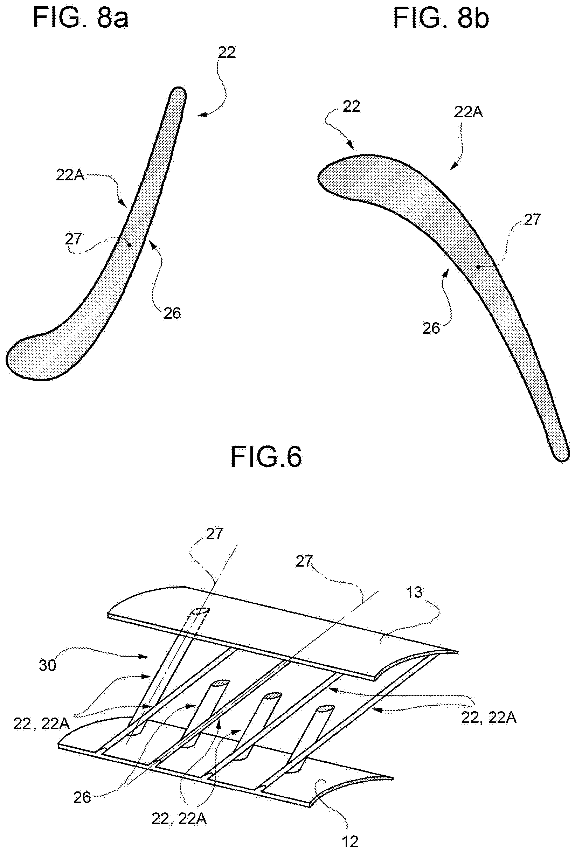

Each stretch 22A also has its own cross-section which is orthogonal to the respective longitudinal axis 27 and is either circular or oblong in shape, either tapered or not at least at one of its ends, or having at least one curved portion, as shown in figures 8A and 8B. In the latter case, each stretch 22A is shaped as a blade of a bladed stator array of a traditional hydraulic machine. The cross-sections of the various elongated stretches 22A are geometrically and dimensionally either equal or different from one zone to the other of conduit 14 or from one elongated element 22 to that adjacent thereto. Similarly, the lengths of the stretches 22A or of the elongated elements 22 are either equal or different from one zone to the other of conduit 14. According to a variant, at least some of the stretches 22A or of the elongated elements 22 are plate-shaped, with rounded or non-rounded edges, of the type shown in figures 8a and 8b. Alternatively, the cross-section of the stretches 22A or of the elongated elements 22 may be either rectangular or rhomboidal. In the variant shown in figure 6, the elongated elements 22 comprise a single rectilinear stretch 22A which extends between the walls 12 and 13, in order to define a grid 30 which is simplified or has a larger mesh than that of grid 23. In such an embodiment, the elongated elements 22 extends again in directions forming an angle different from zero, in a mutual manner and with the feeding direction 20, and in positions which are transversely spaced apart, i.e. without contact points or so as to be arranged tangent to one another. Also in this case, the elongated elements 22 may have either a different distribution or geometrically or dimensionally different cross-sections as their position varies inside conduit 14, as described above.

According to a further variant, inside the conduit, narrow mesh grids 23 are present in some zones and large mesh grids 30 are present in other zones.

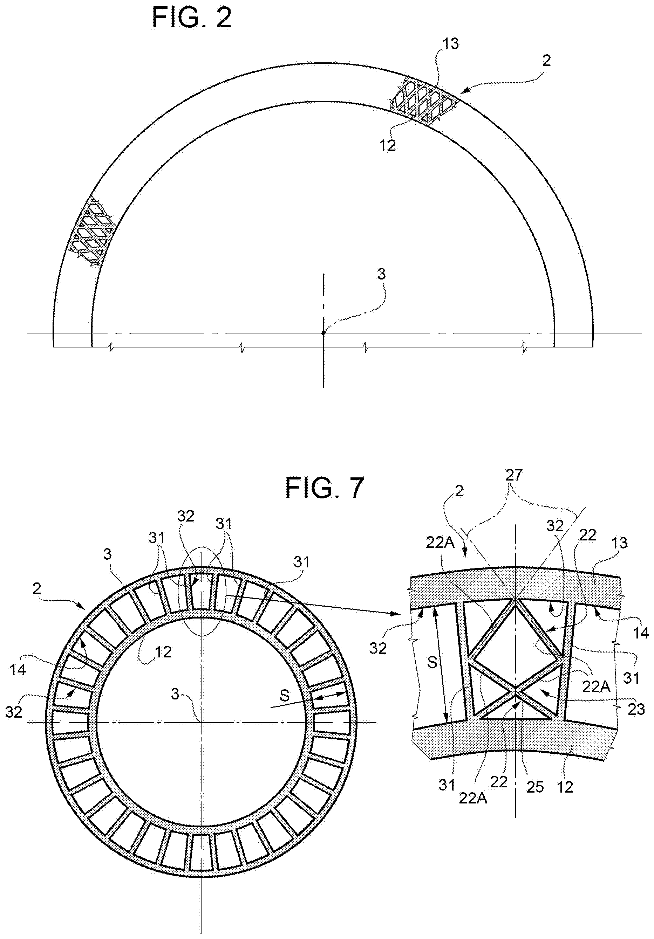

In the further variant shown in figure 7, the walls 12 and 13 are connected together by means of a plurality of plate-shaped radial baffles 31, which are also integrally connected to the walls 12 and 13 and extend along axis 3, not necessarily parallel to the axis 3 itself and along helical paths, for example. The radial baffles 34 divide conduit 14 into a plurality of smaller longitudinal conduits 32 placed side-by-side for guiding the cooling fluid. A perturbation grid of the fluid threads is provided within each smaller channel 32, which in this case is a narrow mesh grid 23. Alternatively, the smaller channels 32 accommodate a large mesh grid 30 or a combination of narrow and large mesh grids over at least one stretch. The channels 32 may have stretches free from grids interlayered or not with gridded stretches.

In general, the placement, geometry and size of each elongated stretch 22A or of an elongated element 22 is determined to obtain a given turbulence of the cooling fluid inside conduit 14 and a desired heat exchange surface, on one hand, and to confer shape stability to casing 4 regardless of the working temperatures and of the mechanical stresses to which the casing 14 itself is subjected, on the other.

Regardless of the type of grid used, the arrangement or cross-section of the elongated elements 22 defining the grid itself, the walls 12 and 13 are always stably connected to the ends of the respective elongated elements 22, which thus behave as beams restrained at the walls 12 and 13 themselves. When the elongated elements 22 lead into a node, in addition to be restrained at their opposite ends, they also have intermediate portions restrained at the other adjacent elongated elements 22.

Regardless of the distribution or geometry of the elongated elements 22, the walls 12 and 13 and the elongated elements 22 themselves are made of the same metal material, e.g. steel, in general nickel alloys or other equivalent metal materials, and the elongated elements 22 along with the walls 12 and 13 form parts of a homogenous monolithic body made in one piece by means of the technique currently known as "Additive Layer Manufacturing". If present, baffles 31 also form part of the body made in one piece as shown in figure 7.

From the above, it is apparent that regardless of the type of grid or distribution of the grids along and inside conduit 14, or even regardless of the geometry or orientation of the elongation elements 22, each of the elongated elements 22 themselves triggers a localized turbulence and a predefined vorticity in the cooling fluid. Such a vorticity drastically reduces up to completely canceling out the thermal layering present in the conduits of the existing solutions, thus allowing the amount of removed heat to be increased, again as compared to the known solutions, with the cooling fluid features being equal.

More in detail, the elongated elements 22 force the cooling fluid to follow paths which are not parallel to wall 12, i.e. to the hot surface of casing 4, but are directed from the outer wall 13 or cold wall towards the inner wall 12. Thereby, a macroscopic mixing movement is created, which tends to uniform the temperature of the fluid along conduit 14 and in radial direction. By managing the orientation of the elongated elements 22 with respect to the feeding direction of the cooling fluid it is then possible to obtain a controlled detachment of the fluid vein on the elongated elements 22.

The presence of grids between the walls 12 and 13 then allows the operative loads to be distributed along main preferential force directions, and thus geometrically stable combustors to be obtained. In addition, as compared to the known solutions, the presence of structural grids inside conduit 14 allows the thickness of the inner wall to be reduced, and casings of lower weight and smaller dimensions to be provided in general. The above is substantially due to the construction of casing 4 which is a monolithic body made in one piece by using a single metal material.

Furthermore, the described grid solutions ensure greater freedom in defining the geometry of the combustion chamber.

Moreover, the presence of the grids 23, 30, with the volume of metal arranged between the walls 12 and 13 being equal, allows a considerable increase in heat exchange surface to be obtained. The speed of the cooling fluid can be modulated, and in general can be controlled, according to the density of the elongated elements 22 and to the size of the conduit 14 where the cooling fluid passes.

Finally, as compared to the known solutions described, the solution according to present invention provides the possibility to obtain a high effective combustion while avoiding the use of a permeable inner wall.

Again, with respect to the above-described known solutions, the inner wall 12 may have a very small thickness, and conveniently a thickness smaller than 0.8 millimeters.

The inner wall thickness may be brought to these low values because the elongated elements 22 define a structural reinforcement, either alone and along with the outer wall.

It is then apparent that the structural strength of casing 4 is much greater than that of the current known solutions, namely because the inner and outer walls and the inner grid defined by the elements 22 are manufactured in one monolithic piece made of a single material characterized by high mechanical strength.

The particular manufacturing method described then allows any type of grid to be implemented without any limitation, unlike the known solutions in which the process is always very constrained.

From the above, it is apparent that modifications and variants may be made to the described combustor 2 without departing from the scope of protection defined by the independent claim.

In particular, it is apparent that the bar-shaped elongated elements 22 may have, for example, curved or plate-shaped stretches which inevitably lead to the formation of different grids from those indicated and shown in the accompanying figures.

Finally, conduit 14 may have stretches free from grids interleaved or not with gridded stretches which are equal to or different from one another.

## Claims

1. A combustor of a liquid propellent motor; the combustor comprising an elongated hollow tubular casing having its own axis and comprising an inner wall, delimiting a combustion chamber for the liquid propellent and an outlet nozzle for the combustion products, and an outer wall, both being coaxial to said axis; the outer and inner walls being spaced apart from each other in radial direction and delimiting at least one sealed guiding conduit for a cooling fluid therebetween in a feeding direction, and turbulence generating means being accommodated in said conduit and intercepted by said cooling fluid; **characterized in that** said turbulence generating means comprise a plurality of bar-shaped elongated elements extending transversely to said direction; said turbulence generating means having their own end portions which are integrally connected to said inner wall and to said outer wall, thus forming part of a reinforcement of said inner wall; said inner and outer walls and said bar-shaped elongated elements form parts of a monolithic body, **characterized by** that it has been made in one piece and of the same metal material by means of the technique of Additive Layer Manufacturing, and that the thickness of said inner wall is less than 0.8 millimeters.

2. A combustor according to claim 1, **characterized in that** at least some of said bar-shaped elongated elements have at least one rectilinear bar stretch.

3. A combustor according to claim 2, **characterized in that** at least some of said rectilinear bar stretches are inclined with respect to one another and with respect to said axis.

4. A combustor according to any one of the preceding claims, **characterized in that** at least some of said bar-shaped elongated elements have their own cross-section which is either circular or oblong or tapered at least at one end or rectangular or rhomboidal.

5. A combustor according to any one of the preceding claims, **characterized in that** at least some of said bar-shaped elongated elements have their own cross-section which is at least partly arched.

6. A combustor according to any one of the preceding claims, **characterized in that** at least two of said bar-shaped elongated elements intersect each other in at least one node.

7. A combustor according to any one of the preceding claims, **characterized in that** at least two of said bar-shaped elongated elements are tangent to each other in at least one point.

8. A combustor according to any one of the preceding claims, **characterized in that** at least some of said bar-shaped elongated elements intersect one another to form a first grid having a plurality of nodes.

9. A combustor according to claim 8, **characterized in that** said grid is a homogeneous grid along at least part of said conduit.

10. A combustor according to claim 8 or 9, **characterized in that** at least some of said bar-shaped elongated elements intersect one another to form a second grid having a plurality of nodes and a different mesh from said first grid.

11. A combustor according to any one of the preceding claims, **characterized in that** it comprises at least one plate-shaped radial baffle extending between said inner and outer walls and being integrally connected to said inner and outer walls to delimit two of said conduits; each said conduit accommodating respective said turbulence generating means which are either equal or different; said inner and outer walls, said baffles and said turbulence generating means forming part of a body made in one piece and of a single metal material.

12. A combustor according to any one of the preceding claims, **characterized in that** the mechanical strength of said metal material is higher than 400 MPa.

13. A combustor according to any one of the preceding claims, **characterized in that** the thermal conductivity of said metal material is higher than 30 W/(m K).

## Patentansprüche

1. Brennkammer eines Flüssigkeitstriebwerks; wobei die Brennkammer ein längliches hohles rohrförmiges Gehäuse umfasst, das seine eigene Achse aufweist, und eine Innenwand, die eine Brennkammer für den Flüssigtreibstoff und eine Auslassdüse für die Verbrennungsprodukte begrenzt, und eine Außenwand umfasst, die beide koaxial zu der Achse sind; wobei die Außen- und Innenwand voneinander in radialer Richtung beabstandet sind und wenigstens einen abgedichteten Führungskanal für ein Kühlfluid dazwischen in einer Zufuhrrichtung begrenzen, und turbulenzerzeugende Mittel in dem Kanal enthalten sind und von dem Kühlfluid erfasst werden; **dadurch gekennzeichnet, dass** die turbulenzerzeugenden Mittel eine Vielzahl von stabförmigen länglichen Elementen umfassen, die sich quer zu der Richtung erstrecken; wobei die turbulenzerzeugenden Mittel ihre eigenen Endabschnitte aufweisen, die einstückig mit der Innenwand und der Außenwand verbunden sind, sodass sie Teil einer Verstärkung der Innenwand bilden; wobei die Innen- und Außenwand und die stabförmigen länglichen Elemente Teile eines monolithischen Körpers bilden, der in einem Stück und aus demselben Metallwerkstoff mittels der Technik des additiven Schichtbauverfahrens gefertigt ist und dass die Dicke der Innenwand weniger als 0,8 Millimeter beträgt.

2. Brennkammer nach Anspruch 1, **dadurch gekennzeichnet, dass** wenigstens einige der stabförmigen länglichen Elemente wenigstens einen geradlinigen Stababschnitt aufweisen.

3. Brennkammer nach Anspruch 2, **dadurch gekennzeichnet, dass** wenigstens einige der geradlinigen Stababschnitte in Bezug aufeinander und in Bezug auf die Achse geneigt sind.

4. Brennkammer nach einem der vorhergehenden Ansprüche, **dadurch gekennzeichnet, dass** wenigstens einige der stabförmigen länglichen Elemente ihren eigenen Querschnitt aufweisen, der entweder rund oder länglich oder an wenigstens einem Ende abgeschrägt ist, oder rechteckig oder rautenförmig ist.

5. Brennkammer nach einem der vorhergehenden Ansprüche, **dadurch gekennzeichnet, dass** wenigstens einige der stabförmigen länglichen Elemente ihren eigenen Querschnitt aufweisen, der zumindest teilweise gewölbt ist.

6. Brennkammer nach einem der vorhergehenden Ansprüche, **dadurch gekennzeichnet, dass** wenigstens zwei der stabförmigen länglichen Elemente einander in wenigstens einem Knoten schneiden.

7. Brennkammer nach einem der vorhergehenden Ansprüche, **dadurch gekennzeichnet, dass** wenigstens zwei der stabförmigen länglichen Elemente zueinander in wenigstens einem Punkt tangential sind.

8. Brennkammer nach einem der vorhergehenden Ansprüche, **dadurch gekennzeichnet, dass** wenigstens einige der stabförmigen länglichen Elemente einander derart schneiden, dass sie ein erstes Gitter mit einer Vielzahl von Knoten bilden.

9. Brennkammer nach Anspruch 8, **dadurch gekennzeichnet, dass** das Gitter ein homogenes Gitter entlang wenigstens eines Teils des Kanals ist.

10. Brennkammer nach Anspruch 8 oder 9, **dadurch gekennzeichnet, dass** wenigstens einige der stabförmigen länglichen Elemente einander derart schneiden, dass sie ein zweites Gitter mit einer Vielzahl von Knoten und einer anderen Maschenweite als das erste Gitter bilden.

11. Brennkammer nach einem der vorhergehenden Ansprüche, **dadurch gekennzeichnet, dass** sie wenigstens ein plattenförmiges radiales Leitblech umfasst, das sich zwischen der Innen- und Außenwand erstreckt und einstückig mit der Innen- und Außenwand verbunden ist, um zwei der Kanäle zu begrenzen; wobei jeder der Kanäle die entsprechenden turbulenzerzeugenden Mittel enthält, die entweder gleich oder verschieden sind; wobei die Innen- und Außenwand, die Leitbleche und die turbulenzerzeugenden Mittel einen Teil eines Körpers bilden, der in einem Stück und aus demselben Metallwerkstoff gefertigt ist.

12. Brennkammer nach einem der vorhergehenden Ansprüche, **dadurch gekennzeichnet, dass** die mechanische Festigkeit des Metallwerkstoffs mehr als 400 MPa beträgt.

13. Brennkammer nach einem der vorhergehenden Ansprüche, **dadurch gekennzeichnet, dass** die Wärmeleitfähigkeit des Metallwerkstoffs mehr als 30 W/(m K) beträgt.

## Revendications

1. Un combusteur d'un moteur à propulseur liquide, ce combusteur comprenant un boîtier tubulaire creux allongé ayant son propre axe et comprenant une paroi intérieure délimitant une chambre de combustion pour le propulseur liquide et un orifice de sortie pour les produits de combustion, et une paroi extérieure, les deux étant coaxiales audit axe ; les parois extérieure et intérieure étant espacées l'une de l'autre dans le sens radial et délimitant entre elles au moins un conduit de guidage étanche pour un liquide de refroidissement dans une direction d'avancement, et des moyens de création de turbulence étant logés dans ledit conduit et interceptés par ledit fluide de refroidissement ; **caractérisé en ce que** lesdits moyens de création de turbulence comprennent une pluralité d'éléments allongés en forme de barre s'étendant transversalement par rapport à ladite direction ; lesdits moyens de création de turbulence ayant leur propres parties d'extrémité qui sont connectées solidairement avec ladite paroi intérieure et ladite paroi extérieure, faisant ainsi partie d'un renforcement de ladite paroi intérieure ; lesdites parois intérieure et extérieure et lesdits élément allongés en forme de barre faisant partie d'un organe monolithe, **caractérisé en ce qu'**il a été réalisé d'un seul tenant et avec le même matériau métallique au moyen de la technique le fabrication additive, et **en ce que** l'épaisseur de la paroi intérieure est inférieure à 0,8 millimètres.

2. Un combusteur selon la revendication 1, **caractérisé en ce qu'**au moins certains des éléments allongés en forme de barre ont au moins un tronçon de barre rectiligne.

3. Un combusteur selon la revendication 2, **caractérisé en ce qu'**au moins certains des tronçons de barre rectilignes sont inclinés les uns par rapport aux autres et par rapport audit axe.

4. Un combusteur selon l'une quelconque des revendications précédentes, **caractérisé en ce qu'**au moins certains desdites éléments allongés en forme de barre ont une section transversale qui est soit circulaire soit oblongue ou effilée au moins à une extrémité ou rectangulaire ou rhomboïdale.

5. Un combusteur selon l'une quelconque des revendications précédentes, **caractérisé en ce qu'**au moins certains desdits éléments allongés en forme de barre ont une section transversale qui est au moins partiellement arquée.

6. Un combusteur selon l'une quelconque des revendications précédentes, **caractérisé en ce qu'**au moins deux desdits éléments allongés en forme de barre s'intersectent à au moins un noeud.

7. Un combusteur selon l'une quelconque des revendications précédentes, **caractérisé en ce qu'**au moins deux desdits éléments allongés en forme de barre sont tangents l'un à autre en au moins un point.

8. Un combusteur selon l'une quelconque des revendications précédentes, **caractérisé en ce qu'**au moins certains desdits éléments allongés en forme de barre s'intersectent pour former une première grille ayant une pluralité de noeuds.

9. Un combusteur selon la revendication 8, **caractérisé en ce que** ladite grille est une grille homogène le long d'au moins une partie dudit conduit.

10. Un combusteur selon la revendication 8 ou 9, **caractérisé en ce qu'**au moins certains des éléments allongés en forme de barre s'intersectent pour former une deuxième grille ayant une pluralité de noeuds et une maille différente de celle de la première grille.

11. Un combusteur selon l'une quelconque des revendications précédentes, **caractérisé en ce qu'**il comprend au moins une chicane radiale en forme de plaque s'étendant entre lesdites parois intérieure et extérieure et connectée solidairement avec lesdites parois intérieure et extérieure pour délimiter deux desdits conduits ; chacun desdits conduits logeant des moyens de création de turbulence respectifs qui sont soit égaux soit différents ; lesdites parois intérieure et extérieure, lesdites chicanes et les moyens de création de turbulence faisant partie d'un organe d'un seul tenant et en un seul matériau métallique.

12. Un combusteur selon l'une quelconque des revendications précédentes, **caractérisé en ce que** la résistance mécanique dudit matériau mécanique est supérieure à 400 MPa.

13. Un combusteur selon l'une quelconque des revendications précédentes, **caractérisé en ce que** la conductivité thermique dudit matériau métallique est supérieure à 30 W/(mK).
